# EUROPEAN PATENT APPLICATION

(11) **EP 1 741 973 A2**
(43) Date of publication of application: **10.01.2007**
(21) Application number: 05025855.7
(22) Date of filing: 26.11.2005
(51) Int. Cl.: F21K 7/00, G02F 1/1335, H05B 33/08

(54) **Lighting device and display apparatus with LEDs**

(30) Priority: 08.07.2005 KR 2005061794
(71) Applicant: Samsung Electronics Co., Ltd., Yeongtong-gu Suwon-city, Gyeonggi-do 442-742 (KR)
(72) Inventor: Kim, Hyun-Jin, Seongdong-gu Seoul (KR); Yoon, Ju-Young, Mok6-dong Yangcheon-gu Seoul (KR); Lee, Sang-Yu, Yongin-si Gyeonggi-do (KR); Kim, Gi-Cherl, Guseong-eup Yongin-si Gyeonggi-do (KR)
(74) Representative: Weitzel, Wolfgang

(57) **Abstract**

A light generating device (100) includes a printed circuit board (110) (PCB) and LEDs grouped in a plurality of light source units (200). Each of the light source units includes a first light source group and a second light source group. The first light source group includes at least two light sources spaced apart from each other by a first distance and the second light source group including at least two light sources. Each of the light sources of the second light source group is spaced apart from a first virtual line segment connecting centers of the light sources of the first light source group by a second distance that is larger than the first distance. A second virtual line segment connecting centers of the light sources of the second light source group crosses the first virtual line segment. Therefore, a number of light sources is reduced to lower a cost of manufacturing the light generating device.

## Description

### BACKGROUND

### 1. Field of the Invention

The present invention relates to a light generating device and a display apparatus having the light generating device. More particularly, the present invention relates to a light generating device capable of reducing the number of light emitting diodes used, and a display apparatus having the light generating device.

### 2. Description of the Related Art

A display device converts an electric signal processed by an information processing device into an image. Examples of the display device include a cathode ray tube (CRT) apparatus, a plasma display panel (PDP) apparatus, a liquid crystal display (LCD) apparatus, an electro-luminance (EL) apparatus, etc.

The LCD apparatus displays an image by using electric and optical characteristics of liquid crystal. The LCD apparatus has a light weight, a low driving voltage, a low power consumption, etc. Therefore, the LCD apparatus is often used in a variety of applications.

The LCD apparatus displays an image by using external light. In other words, the LCD panel within the LCD apparatus does not emit light by itself. Therefore, the LCD apparatus requires a light source that provides an LCD panel with light.

Generally, a conventional LCD apparatus employs a light source generating a white light, such as a cold cathode fluorescent lamp (CCFL) or a flat fluorescent lamp (FFL). Recently, an LCD apparatus employing light sources that emit three base colors separately has been developed in order to enhance color-reproducibility. The LCD apparatus employs, for example, a red light emitting diode (red LED), a green light emitting diode (green LED) and a blue light emitting diode (blue LED). Red light, green light and blue light generated by the red, green and blue LEDs, respectively, are matched with color filters, so that the color-reproducibility is enhanced.

However, each of the red, green and blue LEDs emits light within a limited range, so that the LCD apparatus employs a large number of red, green and blue LEDs, which increases the manufacturing cost thereof and amount of heat generated. Furthermore, the red, green and blue LEDs are disposed as close with each other as possible in order to enhance the color-mixing characteristics, so that heat generated from the red, green and blue LEDs results in lower luminance of the red, green and blue LEDs. Therefore, a heat-dissipating plate, a fan, etc. is used.

### SUMMARY

In accordance with the present invention, a light generating device capable of reducing a number of light emitting diodes and preventing heat condensing.

The present invention also provides a display apparatus having the above light generating device.

In an exemplary light generating device according to the p resent invention, the light generating device comprises a circuit board and a plurality of light source units. Each of the light source units comprises a first light source group and a second light source group. The first light source group comprises at least two light sources spaced apart from each other by a first distance and the second light source group comprising at least two light sources. Each of the light sources of the second light source group is spaced apart from a first virtual line segment connecting centers of the light sources of the first light source group by a second distance that is larger than the first distance. A second virtual line segment connecting centers of the light sources of the second light source group crosses the first virtual line segment.

In another exemplary light generating device according to the present invention, the light generating device comprises a circuit board, a plurality of light source groups and a plurality of green light sources. Each of the light source groups comprises at least two light sources arranged on the circuit board by a first distance. The green light sources are arranged on the circuit board by a second distance that is smaller than the first distance.

In an exemplary display apparatus according to the present invention, the display apparatus comprises a receiving container, a display panel and a light generating device. The receiving container comprises a bottom plate and sidewalls extended from edge portions of the bottom plate. The display panel displays an image by using light. The light generating device is disposed on the bottom plate of the receiving container. The light generating device comprises a circuit board and a plurality of light source units. Each of the light source units comprises a first light source group and a second light source group. The first light source group comprises at least two light sources spaced apart from each other by a first distance. The second light source group is spaced apart from a virtual line connecting centers of the light sources of the first light source group by a second distance that is larger than the first distance.

In another exemplary display apparatus according to the present invention, the play apparatus comprises a receiving container, a display panel and a light generating device. The receiving container comprises a bottom plate and sidewalls extended from edge portions of the bottom plate. The display panel displays an image by using light. The light generating device is disposed on the bottom plate of the receiving container. The light generating device comprises a circuit board, a plurality of light source groups and a plurality of green light sources. Each of the light source groups comprises at least two light sources arranged on the circuit board by a first distance. The green light sources are arranged on the circuit board by a second distance that is smaller than the first distance.

According to the present invention, a number of light sources is reduced to lower a cost of manufacturing the light generating device. Furthermore, a distance between the light sources is increased, so that heat generated from the light sources may be easily dissipated.

### BRIEF DESCRIPTION OF THE DRAWINGS

The above and other features a nd advantages of the present invention will become more apparent by describing in detailed exemplary embodiments thereof with reference to the accompanying drawings, in which:
FIG. 1 is a plan view illustrating a light generating device according to an exemplary embodiment of the present invention;
FIG. 2 is an enlarged view illustrating a portion of the light generating device in FIG. 1;
FIG. 3 is a side view illustrating the portion of the light generating device in FIG. 2;
FIG. 4 is a schematic view illustrating an effective radius of light source of the light generating device in FIG. 2;
FIG. 5 is a plan view illustrating a portion of a light generating device according to another exemplary embodiment of the present invention;
FIG. 6 is a schematic view illustrating an effective radius of light source of the light generating device in FIG. 5;
FIG. 7 is a plan view illustrating a portion of a light generating device according to still another exemplary embodiment of the present invention;
FIG. 8 is a schematic view illustrating an effective radius of light source of the light generating device in FIG. 7;
FIG. 9 is an exploded perspective view illustrating a display apparatus according to an exemplary embodiment of the present invention; and
FIG. 10 is a plan view illustrating an arrangement of light generating devices in FIG. 9.

### DESCRIPTION OF THE EMBODIMENTS

It should be understood that the exemplary embodiments of the present invention described below may be varied and modified in many different ways without departing from the inventive principles disclosed herein, and the scope of the present invention is therefore not limited to these particular embodiments. Rather, these embodiments are provided so that this disclosure will be thorough and complete, and will fully convey the concept of the invention to those skilled in the art by way of example and not of limitation.

Hereinafter, the embodiments of the present invention will be described in detail with reference to the accompanied drawings.

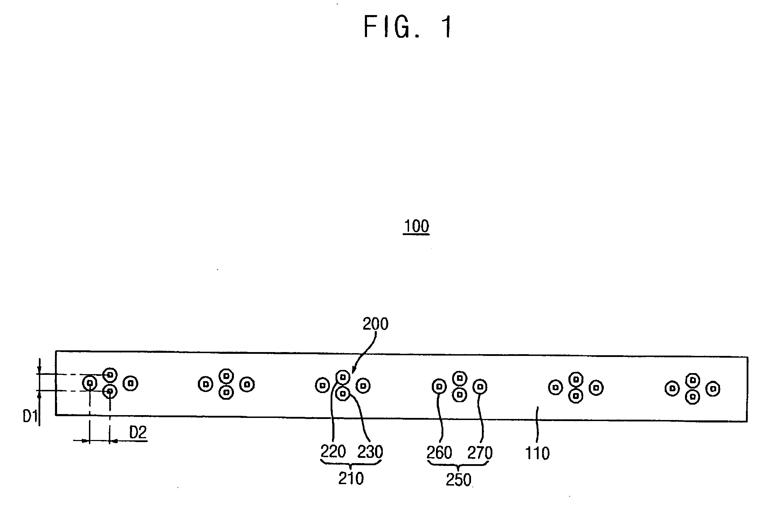

FIG. 1 is a plan view illustrating a light generating device according to an exemplary embodiment of the present invention.

Referring to FIG. 1, a light generating device 100 according to the present embodiment includes a circuit board 110 and a plurality of light source units 200.

The circuit board 110 has, for example, a rectangular plate shape. A printed circuit board (PCB), a PCB having metal being coated thereon and having a relatively high thermal conductivity, etc. may be employed as the circuit board 110. The circuit board 110 includes power lines (not shown) for applying power to the light source units 200.

The light source units 200 are disposed, for example, along a line with each light source unit 200 being separated from adjacent light source units 200 by a substantially uniform distance. Each of the light source units 200 includes a first light source group 210 and a second light source group 250.

The first light source group 210 includes a red light source 220 and a blue light source 230. The red light source 220 and the blue light source 230 are disposed as close from each other as possible in order to enhance the color-mix characteristics. A center of the red light sources 220 and a center of the blue light sources 230 are spaced apart from each other by a first distance D1.

The first light source group 210 may include at least three light sources. For example, the first light source group 210 may include two of the red light sources 220 and one of the blue light source 230. Alternatively, the first light source group 210 may include one of the red light sources 220 and two of the blue light sources 230. Alternatively, the first light source group 210 may include two of the red light sources 220 and two of the blue light sources 230. When the first light source group 210 includes more than one of the red light source or more than one blue light source, the red light source and the blue light source are disposed such that a distance of the red and blue light source is minimized. The minimized distance is corresponds to the first distance D1. In the present embodiment, the first light source group 210 includes one red light source 220 and one blue light source 230.

The second light source group 250 includes a first green light source 260 and a second green light source 270. The first and second green light sources 260 and 270 are disposed such that each of the first and second green light sources 260 and 270 is spaced apart from a virtual line connecting the centers of the red and blue light sources 220 and 230 by a second distance D2 that is larger than the first distance D1. The first and second green light sources 260 and 270 are disposed on opposite sides of the virtual line connecting the centers of the red and blue light sources 220 and 230.

By disposing the first and second green light sources 260 and 270 such that each of the first and second green light sources 260 and 270 is spaced apart from the virtual line by the second distance D2, a distance between the light source units 200 adjacent to each other increases, so that a number of the light source units 200 per unit length of the circuit board 110 is reduced.

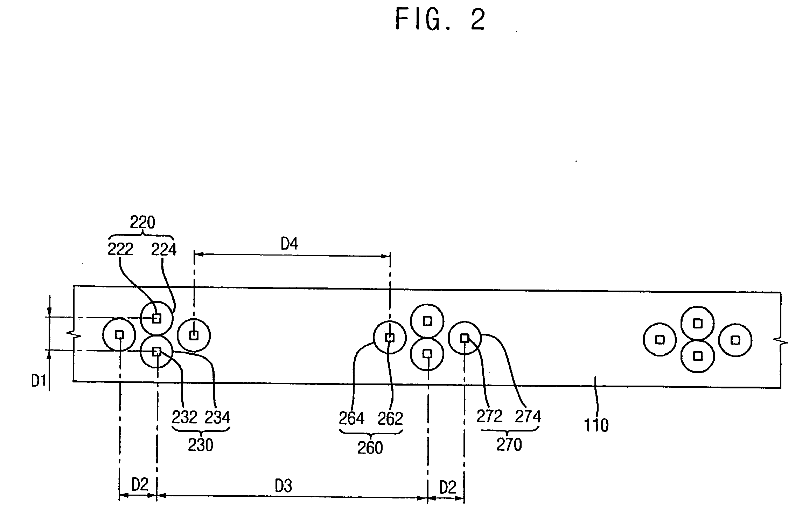

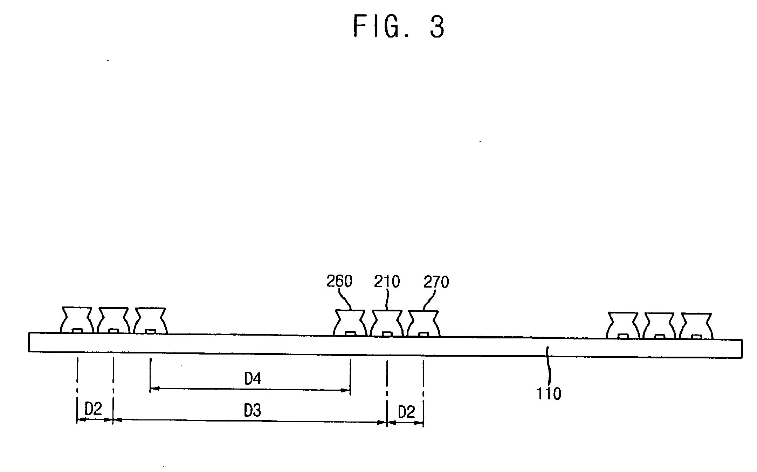

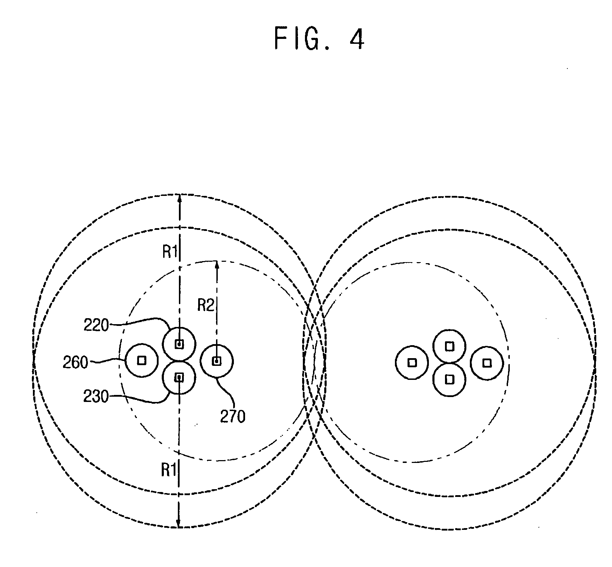

FIG. 2 is an enlarged view illustrating a portion of the light generating device in FIG. 1. FIG. 3 is a side view illustrating the portion of the light generating device in FIG. 2. FIG. 4 is a schematic view illustrating an effective radius of light source of the light generating device in FIG. 2.

Referring to FIGS. 2, 3 and 4, the light generating device 100 includes a plurality of light source units 200 disposed a uniform distance from adjacent light source units 200. Each of the light source units 200 includes the first light source group 210 and the second light source group 250.

The first light source group 210 includes the red light source 220 and the blue light source 230. A center of the red light source 220 and a center of the blue light source 230 are spaced apart from each other by a first distance D1.

The red light source 220 and the blue light source 230 are disposed as close to each other as possible in order to enhance the color-mix characteristics. According to a color coordinate, a red color relates to a y-axis, and a red color and a blue color relate to an x-axis. The y-axis of the color coordinate relates to a luminance, and the x-axis of the color coordinate relates to a light-mixing. Therefore, by disposing the red light source 220 and the blue light source 230 as close as possible, the light-mixing characteristic are enhanced.

The red light source 220 includes a red light emitting diode (red LED) 222 and a first lens 224 covering the red LED 222. The blue light source 230 includes a blue light emitting diode (blue LED) 232 and a second lens 234 covering the blue LED 232.

The red LED 222 generates light having a wavelength that is in a range of about 620nm to about 660nm, and the blue LED 232 generates light having a wavelength that is in a range of about 430nm to about 470nm. The first and second lenses 224 and 234 have a substantially identical shape. The first and second lenses 224 and 234 diffuse a red light generated from the red LED 222 and a blue light generated from the blue LED 232 to increase an effective light-emitting area of the red and blue LEDs 222 and 232, respectively.

The second light source group 250 includes the first green light source 260 and the second green light source 270. The first and second green light sources 260 and 270 are disposed such that each of the first and second green light sources 260 and 270 is spaced apart from a virtual line connecting the centers of the red and blue light sources 220 and 230 by a second distance D2 that is larger than the first distance D1. The first and second green light sources 260 and 270 are disposed on opposite sides of the virtual line connecting the centers of the red and blue light sources 220 and 230.

The first green light source 260 includes a first green light emitting diode (green LED) 262 and a third lens 264 that covers the first green LED 262, and the second green light source 270 includes a second green light emitting diode (green LED) 272 and a fourth lens 274 that covers the second green LED 272.

The first and second green LEDs 262 and 272 generate light having a wavelength that is in a range of about 500nm to about 540nm. The third and fourth lenses 264 and 274 have a substantially identical shape. The third and fourth lenses 264 and 274 diffuse green light generated from the first and second green LEDs 262 and 272 to increase an effective light-emitting area of the first and second green LEDs 262 and 272, respectively. The light-emitting area of each of the LEDs has a circular shape having an effective radius.

The effective light-emitting area of the light sources, which is perceived through a user's e yes, changes according to the shape of the lenses. However, even when the shape of the lenses is identical, the effective light-emitting area of the light sources may be different in accordance with a color of a light generated by the light source disposed under the lenses. In detail, even when the first, second, third and fourth lenses 224, 234, 264 and 274 disposed over the red LED 222, the blue LED 232, the first green LED 262 and the second green LED 272, respectively, have identical shape, a first effective light emitting area of the red and blue LEDs 222 and 232 has a first effective-radius R1 and a second effective light emitting area of the first and second green LEDs 262 and 272 has a second effective-radius R2 that is smaller than the first effective-radius R1. Therefore, even though a third distance D3 between the red LED 222 (or the blue LED 232) of a specific light source unit 200 and the red LED 222 (or the blue LED 232) of an adjacent light source unit 200 is longer than a fourth distance D4 between the second green LED 272 of the specific light source unit 200 and the first green LED 262 of the adjacent light source unit 200, a luminance uniformity of the red LED 222 (or the blue LED 232) may be substantially equalized to a luminance uniformity of the green LEDs 262 and 272.

The third distance D3 is adjusted to be substantially equal to or less than double the first effective-radius R1 in order to create uniformity in the luminance of the red LED 222 (or the blue LED 232). Additionally, the fourth distance D4 is adjusted to be substantially equal to or less than twice the second effective-radius R2 in order to create uniformity in the luminance of the first and second green LEDs 262 and 272.

According to the present embodiment, a ratio of the third and fourth distances D3 and D4 is about four to three (4:3). For example, when the effective-radius of the first, second, third and fourth lenses 224, 234, 264 and 274 is about 30mm, the first and second green light sources 260 and 270 are disposed such that the fourth distance D4 is about 60mm, and the first light source groups 210 are disposed such that the third distance D3 is about 80mm. That is, the fourth distance D4 is about twice the second effective radius R2, and the third distance D3 is substantially equal to or less than about twice the first effective radius R1. The first and second green light sources 260 and 270 are disposed such that the second distance D2 is about 10mm. A distance between the light source units 200 corresponds to the third distance D3, so that the distance between the light source units 200 is about 80mm.

Therefore, in an embodiment in which the lenses having an effective radius of about 30mm are employed, a distance between light sources is about 70mm when the red light source 220, the blue light source 230, the first green light source 260 and the second green light source 270 are disposed by substantially the same distance from a center of each of the light sources according to the effective radius of the lens. However, when only the fourth distance D4 between the first and second green light sources 260 and 270 is adjusted according to the effective radius of lenses, a distance between the light source units 200 is increased to be about 80mm. An effective light emitting region is proportional to a square of the distance between the light source units 200. Therefore, the number of the light sources may be reduced to be (70mm)²/(80mm)² =77%.

The first, second, third and fourth lenses 224, 234, 264 and 274 having a wide viewing angle are used in order to enhance the color mixture characteristics and to increase the coverage area. Each of the first, second, third and fourth lenses 224, 234, 264 and 274 has an outer surface having an elliptical shape and a center portion is recessed. When the viewing angle is increased, an effective radius of the first, second, third and fourth lenses 224, 234, 264 and 274 is increased. As a result, when the first, second, third and fourth lenses 224, 234, 264 and 274 having a wide viewing angle are employed, a distance between the light source units 200 is increased to reduce a number of the light source units 200.

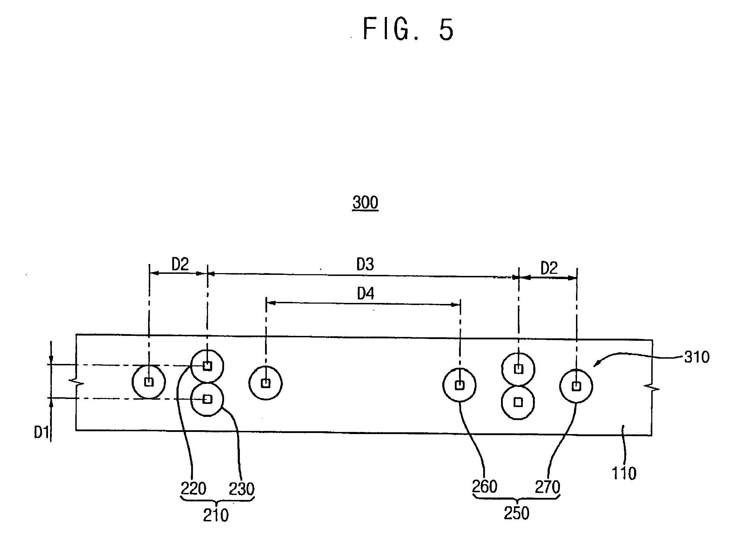

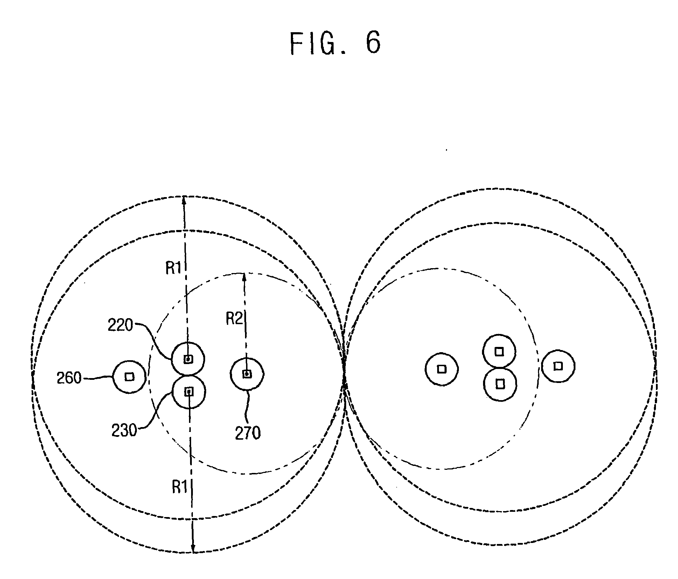

FIG. 5 is a plan view illustrating a portion of a light generating device according to another exemplary embodiment of the present invention, and FIG. 6 is a schematic view illustrating an effective radius of light source of the light generating device in FIG. 5. The light generating device of the present embodiment is substantially the same as in the above-mentioned embodiment in FIG. 2 except for a change in the distance between light sources. Thus, the same reference numerals will be used to refer to the same or similar parts as those described in the above-mentioned embodiment in FIG. 2 and any further explanation concerning the above elements will be omitted.

Referring to FIGS. 5 and 6, the light generating device 300 according to the present embodiment includes a circuit board 110 and a plurality of light source units 310 formed on the circuit board 110 separated by a uniform interval. Each of the light source units 310 includes a first light source group 210 and a second light source group 250.

The first light source group 210 includes the red light source 220 and the blue light source 230. A center of the red light sources 220 and a center of the blue light sources 230 are spaced apart from each other by a first distance D1. The red light source 220 and the blue light source 230 are disposed as close from each other as possible in order to enhance the color-mix characteristics.

The second light source group 250 includes the first green light source 260 and the second green light source 270. The first and second green light sources 260 and 270 are disposed such that each of the first and second green light sources 260 and 270 is spaced apart from a virtual line connecting the centers of the red and blue light sources 220 and 230 by a second distance D2 that is larger than the first distance D1. The first and second green light sources 260 and 270 are disposed on opposite sides of the virtual line connecting the centers of the red and blue light sources 220 and 230.

A third distance D3 between the first light source groups including the red light source 220 and the blue light source 230 is determined by a first effective radius R1 of the red light source 220 and the blue light source 230, as perceived by human eyes. The third distance D3 corresponds to about double the first effective radius R1, which is a maximum distance for maintaining luminance uniformity of red and blue colors.

A fourth distance D4 between the second green light source 270 of a specific light source unit and the first green light source 260 of an adjacent light source unit is determined by a second effective radius R2 of the first and second green light sources 260 and 270, as perceived by human eyes. The fourth distance D4 corresponds to about double the second effective radius R2, which is a maximum distance for maintaining luminance uniformity of green light.

According to the present embodiment, a ratio of the third and fourth distances D3 and D4 is about four point five to three (4.5:3). For example, when the effective-radius of the first, second, third and fourth lenses 224, 234, 264 and 274 is about 30mm, the first and second green light sources 260 and 270 are disposed such that the fourth distance D4 is about 60mm, and the first light source groups 210 are disposed such that the third distance D3 is about 90mm. That is, the fourth distance D4 is about twice the second effective radius R2, and the third distance D3 is substantially equal to or less than about twice the first effective radius R1. The first and second green light sources 260 and 270 are disposed such that the second distance D2 is about 15mm. A distance between the light source units 200 corresponds to the third distance D3, so that the distance between the light source units 200 is about 90mm.

Therefore, in an embodiment in which the lenses having an effective radius of about 30mm are employed, a distance between light sources is about 70mm when the red light source 220, the blue light source 230, the first green light source 260 and the second green light source 270 are disposed by substantially the same distance from a center of each of the light sources according to the effective radius of the lens. However, when only the fourth distance between the first and second green light sources 260 and 270 is adjusted according to the effective radius of lenses, a distance between the light source units 200 is increased to be about 90mm.

As a result, a distance between the light source units 310 is increased to reduce a number of light sources per unit area. Furthermore, heat generated from the light sources may be more easily dissipated.

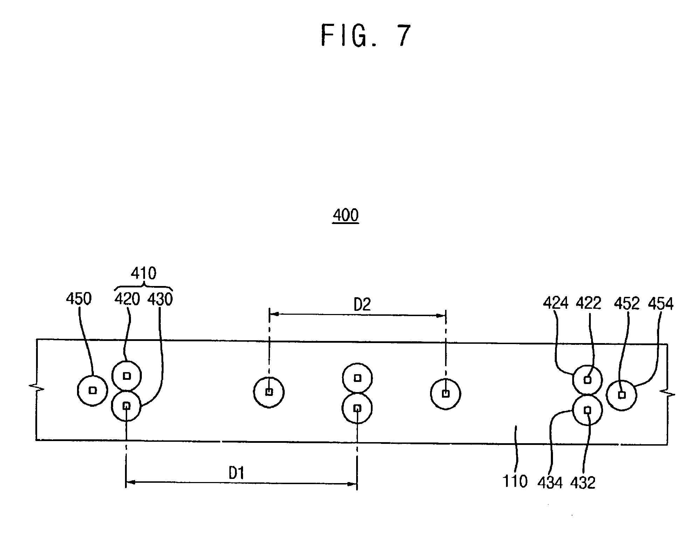

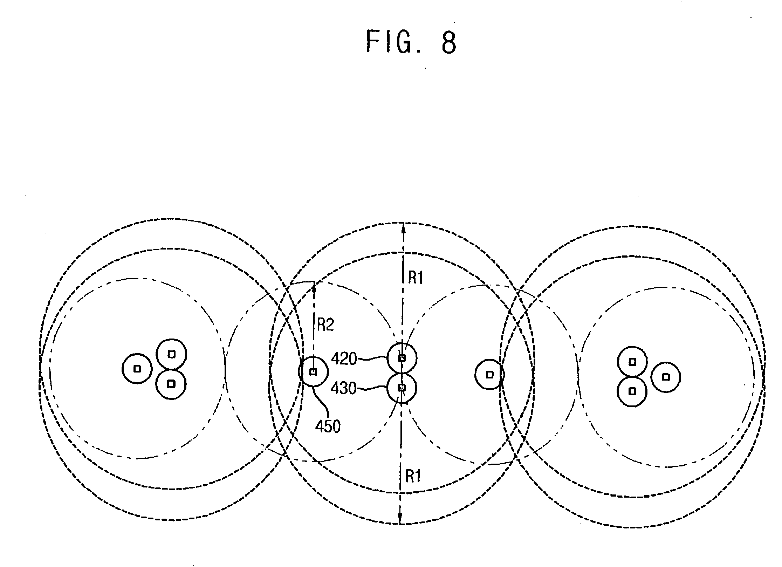

FIG. 7 is a plan view illustrating a portion of a light generating device according to still another exemplary embodiment of the present invention, and FIG. 8 is a schematic view illustrating an effective radius of a light source of the light generating device in FIG. 7.

Referring to FIGS. 7 and 8, a light generating device according to the present embodiment includes a circuit board 110, a plurality of light source groups 410 and a plurality of green light sources 450.

The circuit board 110 is substantially the same as that described above with respect to FIG. 1. Thus, the same reference numerals will be used to refer the same or similar parts and any further explanation concerning the above elements will be omitted.

The light source groups 410 are spaced apart from each other by a first distance D1. Each of the light source groups 410 includes a red light source 420 and a blue light source 430. The red light source 420 and the blue light source 430 are disposed as close as possible to each other in order to enhance the color mix characteristics. The first light source group 410 may include at least three light sources. For example, the first light source group 410 may include two of the red light sources 420 and one of the blue light sources 430. Alternatively, the first light source group 410 may include one of the red light sources 420 and two of the blue light sources 430. Alternatively, the first light source group 410 may include two of the red light sources 420 and two of the blue light sources 430. In the present embodiment, the first light source group 410 includes one red light source 420 and one blue light source 430.

The red light source 420 includes a red light emitting diode (red LED) 422 and a first lens 424 covering the red LED 422. The blue light source 430 includes a blue light emitting diode (blue LED) 432 and a second lens 434 covering the blue LED 432.

The red LED 422 generates light having a wavelength that is in a range of about 620nm to about 660nm, and the blue LED 432 generates light having a wavelength that is in a range of about 430nm to about 470nm. The first and second lenses 424 and 434 have a substantially identical shape. The first and second lenses 424 and 434 diffuse a red light generated from the red LED 422 and a blue light generated from the blue LED 432 to increase an effective lightemitting area of the red and blue LEDs 422 and 432, respectively.

The green light sources 450 are spaced apart from each other by a second distance D2 that is smaller than the first distance D1. Each of the green light sources 450 is disposed between the light source groups 410. The green light source group 450 includes a green light emitting diode (green LED) 452 and a third lens 454 covering the green LED 452. The green LED 462 generates light having a wavelength that is in a range of about 500nm to about 540nm. The third lens 454 has a substantially identical shape with the first and second lenses 424 and 434. The third lens 454 diffuses green light generated from the green LED 462 to increase an effective light-emitting area of the green LED 462. The light-emitting area of each of the LEDs has a circular shape having an effective radius.

The effective light-emitting area of the light sources, which is perceived by a user's eyes, changes according to the shape of the lenses. However, even when the shape of the lenses is identical, the effective light-emitting area of the light sources may be different in accordance with a color of a light generated by the light source disposed under the lenses. In detail, even when the first, second and third lenses 424, 434 and 454 disposed over the red LED 422, the blue LED 432 and the green LED 452, respectively, have identical shape with each other, a first effective light emitting area of the red and blue LEDs 422 and 432 has a first effective-radius R1 and a second effective light emitting area of the green LED 452 has a second effective-radius R2 that is smaller than the first effective-radius R1. Therefore, the light source groups 410 including the red light source 420 and the blue light source 430 are disposed to have the first distance D1 according to the first effective radius R1, and the green light sources 450 are disposed to have the second distance D2 according to the second effective radius R2 regardless of the light source groups 410. That is, an arrangement of the green light sources 450 is independent from an arrangement of the light source groups 410.

In detail, the first distance D1 between the light source groups 410 having the red and blue light sources 420 and 430 is determined by the first effective radius R1 of the red and blue light sources 420 and 430, which is perceived by human eyes. In order to maintain luminance uniformity of the red and blue light sources 420 and 430, the first distance D1 is no more than twice the first effective radius R1.

The second distance D2 between the green light sources 450 is determined by the second effective radius R2 of the green light sources 450, which is perceived by human eyes. In order to maintain luminance uniformity of the green light sources 450, the second distance D2 is no more than twice the second effective radius R2.

According to the present embodiment, a ratio of the first distance D1 to the second distance D2 is in a range of about four to three (4:3) to four point five to three (4.5:3). When the first, second and third lenses 424, 434 and 454 having the effective radius of about 30mm are employed, the light source groups 410 are disposed such that a distance between the light source groups 410 is to be in a range of about 80mm to about 90mm, which corresponds to twice the first effective radius R1, and the green light sources 450 are arranged such that a distance between the green light sources 450 is about 60mm, which corresponds to twice the second effective radius R2. By adjusting the first and second distances D1 and D2, a position of the light source groups 410 and a position of the green light sources 450 are not overlapped with each other.

As described above, when the light source groups 410 are arranged by the first distance D1, and the green light sources 450 are arranged by the second distance D2 regardless of the light source groups 410, a number of the green light sources 450 may be further reduced. Additionally, a distance between the green light sources 450 may be increased more, so that heat may be dissipated easily.

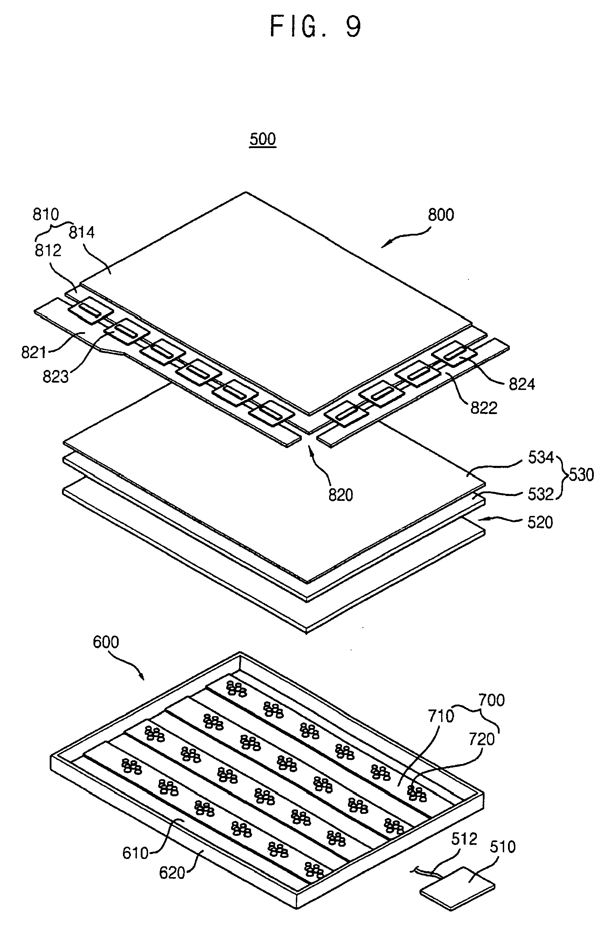

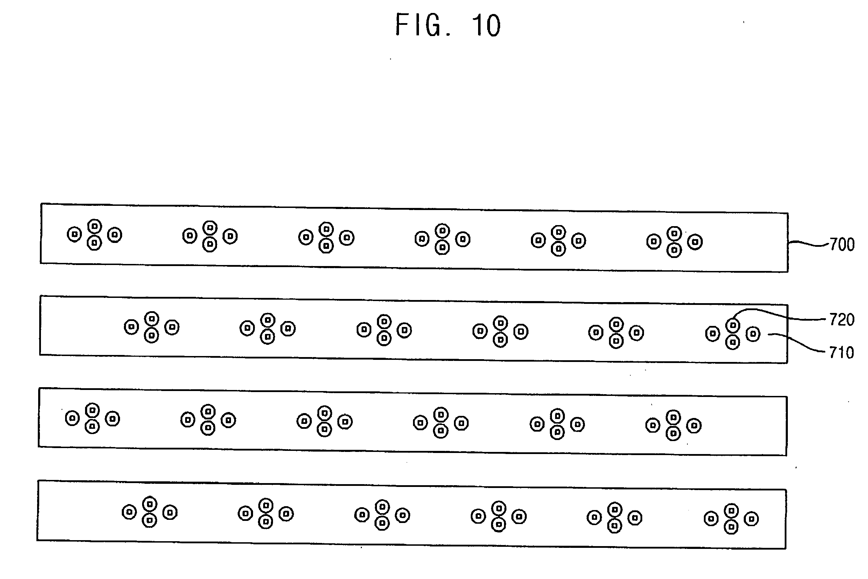

FIG. 9 is an exploded perspective view illustrating a display apparatus according to an exemplary embodiment of the present invention and FIG. 10 is a plan view illustrating an arrangement of light generating devices in FIG. 9.

Referring to FIGS. 9 and 10, a display apparatus 500 according to the present invention includes a receiving container 600, a light generating device 700 and a display unit 800.

The receiving container 600 receives the light generating device 700. The receiving container 600 includes a bottom plate 610 and sidewalls 620. The sidewalls 620 upwardly extend from edge portions of the bottom plate 610. The receiving container 600 comprises, for example, metal.

The light generating device 700 is disposed on the bottom plate 610 of the receiving container 600. The light generating device 700 generates light. A plurality of the light generating devices 700 may be disposed on the bottom plate 610.

In the embodiment shown in FIG. 9, a plurality of light generating devices 700 are disposed in parallel with each other a nd spaced a part from each other. The light generating devices 700 are disposed such that light source units 720 are disposed in an offset arrangement. In other words, the light generating devices 700 are disposed such that each of the light source units 720 of a specific light generating device 700 is disposed between the light source units 720 of a next light generating device 700 that is adjacent to the specific light generating device 700.

Alternatively, each of the light generating devices 700 may have a single circuit board 710 and a plurality of light source units 720 arranged along a plurality of lines on that circuit board. Furthermore, the circuit board 710 may be disposed on outer face of the receiving container, and the light source units 720 is inserted into the holes formed on the bottom plate 610.

The light generating device 700 may correspond to any of the above-described light generating devices in FIGS.1 through 8. Thus, any further explanation will be omitted.

The display unit 800 includes a display panel 810 and a driving circuit part 820. The display panel 810 displays an image by using light generated by the light generating device 700. The driving circuit part 820 drives the display unit 800.

The display panel 810 includes a first substrate 812, a second substrate 814 facing the first substrate 812, and a liquid crystal layer (not shown) disposed between the first and second substrates 812 and 814.

The first substrate 812 includes a first transparent substrate and a plurality of thin film transistors (TFTs) formed on the first transparent substrate. The TFTs are arranged in a matrix shape. A glass substrate may be employed as the first transparent substrate. Each of the TFTs includes a source electrode that is electrically connected to one of data lines, a gate electrode that is electrically connected to one of gate lines, or a drain electrode that is electrically connected to a pixel electrode. The pixel electrode comprises an optically transparent and electrically conductive material.

The second substrate 814 includes a second transparent substrate, a color filter layer and a common electrode. A glass substrate may be employed as the second transparent substrate. The color filter layer includes a red color filter, a green color filter and a blue color filter. The color filter layer is formed on the second transparent substrate. The common electrode is formed on the color filter layer. The common electrode comprises an optically transparent and electrically conductive material.

When a gate voltage is applied to the gate lines, the TFT is turned on, so that a data voltage that is applied to the data line is applied to the pixel electrode through the TFT. As a result, electric fields are generated between the pixel electrode and the common electrode to alter an arrangement of liquid crystal molecules of the liquid crystal layer. When an arrangement of the liquid crystal molecules is altered, an optical transmissivity is changed to display an image.

The driving circuit part 820 includes a data printed circuit board (data PCB) 821, a gate printed circuit board (gate PCB) 822, a data driving circuit film 823 and a gate driving circuit film 824. The data PCB 821 provides the display panel 810 with the data voltage. The gate PCB 822 provides the display panel 810 with the gate voltage. The data driving circuit film 823 connects the data PCB 821 to the display panel 810, and the gate driving circuit film 824 connects the gate PCB 822 to the display panel 810. The data driving circuit film 823 and the gate driving circuit film 824 may be formed through a tape carrier package (TCP) or a chip on film (COF). The display apparatus 500 may not include the gate PCB 822, when a gate driving circuit is directly formed on the display panel 810, and the gate driving circuit film 824 includes wirings for transferring the gate signals.

The display apparatus 500 further includes a power supply device 510. The power supply device 510 applies a power to the light generating device 700. The power generated from the power supply device 510 is transferred to the light generating device 700 through a wire 512.

The display device 500 further includes a light guiding member 520. The light guiding member 520 is disposed over the light generating device 700. The light guiding member 520 is spaced apart from the light generating device 700. The light guiding member 520 guides red light, blue light and green light to be mixed with each other. As a result, a white light exits the light guiding member 520. The light guiding member 520 comprises, for example, polymethylmethacrylate (PMMA).

The display apparatus 500 may further include an optical member 530. The optical member 530 is disposed on the light guiding member 520. The optical member 530 is spaced apart from the light guiding member 520 in order to completely fix the red, blue and green lights. The optical member 530 comprises a light diffusing plate 532 diffusing light-that exits the light guiding member 520, and an optical sheet 534 that is disposed on the light diffusing plate 532. The light diffusing plate 532 diffuses light that exits the light guiding member 520 to enhance luminance uniformity. The light diffusing plate 532 has a plate shape having a predetermined thickness. The light diffusing plate 532 comprises, for example, polymethylmethacrylate (PMMA). The light diffusing plate 532 may further include a plurality of light diffusing members disposed in the light diffusing plate 532. The optical sheet 534 enhances optical characteristics. The optical sheet 534 may correspond to a light-condensing sheet that condenses light in order to enhance a front-view luminance. The optical sheet 534 may correspond to a light diffusing sheet that further diffuses light exiting the light diffusing plate 532. The optical sheet 534 comprises various optical films.

### Experimental example

A light generating device in FIGS. 1 through 4 was prepared, and luminance uniformity and color coordinate were measured. In detail, the light generating device according to the present invention has a plurality of light source units. Each of the light source units includes first and second light source units. The first light source unit includes a red light source and a blue light source both of which are disposed as close as possible from each other. The second light source unit includes first and second green light sources spaced apart from a virtual line connecting the centers of the red and blue light sources by about 10mm (or D2 is about 10mm). The first light source units are spaced apart from each other by about 80mm (or D3 is about 80mm).

### Comparative example

A conventional light generating device was prepared, and luminance uniformity and color coordinate were measured. The conventional light generating device has a plurality of light source units. Each of the light source units includes a red light source, a blue light source, a first green light source and a second green light source spaced apart from a center of a light source unit by a uniform distance, and a distance between the light source units is about 70mm.

**Table 1**

| | Luminance uniformity | Color coordinate (x ± Δx) | Color coordinate (y ± Δy) |
|---|---|---|---|
| Comparative example | 93.6% | 0.253 ± 0.0046 | 0.281 ± 0.0069 |
| Experimental example | 92% | 0.261 ± 0.0036 | 0.281 ± 0.0031 |

Referring to Table 1, a luminance uniformity of the comparative example was measured to be 93.6% and a luminance uniformity of the experimental example was measured to be 92%, which is slightly lower than that of the comparative example. However, a distance between the light source units of the comparative example is about 70mm, and a distance between the light source units of the experimental example is about 80mm, which is much greater than the that of the comparative example. Therefore, the number of light sources may be reduced significantly. Furthermore, the heat generated by the light sources may be more easily dissipated.

Additionally, when a deviation of color coordinate Δx and Δy is within 0.01, then, the deviation is acceptable. According to the experimental example, deviations of color coordinate Δx and Δy were measured to be 0.0036 and 0.0031, which is within an acceptable range.

According to the present invention, the number of light sources is reduced to lower a cost of manufacturing the light generating device.

Furthermore, the distance between the light sources is increased, so that heat generated from the light sources may be more easily dissipated.

Having described the exemplary embodiments of the present invention and advantages that may be achieved, it is noted that various changes, substitutions and alterations can be made herein without departing from the spirit and scope of the invention as defined by appended claims.

## Claims

1. A light generating device comprising:
a circuit board; and
a plurality of light source units, each of the light source units comprising a first light source group and a second light source group, the first light source group comprising at least two light sources spaced apart from each other by a first distance and the second light source group comprising at least two light sources, wherein each of the light sources of the second light source group are spaced apart from a first virtual line segment connecting centers of the light sources of the first light source group by a second distance that is larger than the first distance, a second virtual line segment connecting centers of the light sources of the second light source group crossing the first virtual line segment.

2. The light generating device of claim 1, wherein the light sources of the second light source group are disposed symmetrically with respect to the first virtual line connecting centers of the light sources of the first light source group.

3. The light generating device of claim 2, wherein the first light source group comprises a red light source and a blue light source.

4. The light generating device of claim 3, wherein the second light source group comprises a first green light source and a second green light source, and the first and second green light sources disposed on opposite sides of the virtual line connecting centers of the light sources of the first light source group.

5. The light generating device of claim 4, wherein a first effective radius of the red and blue light sources is larger than a second effective radius of the first and second green light sources.

6. The light generating device of claim 5, wherein the first light source group of a specific light source unit is spaced apart from a first light source group of a next light source unit that is adjacent to the specific light source unit by a third distance that is substantially equal to or less than twice the first effective radius.

7. The light generating device of claim 6, wherein the first and second green light sources in the specific and next light source units, respectively, are spaced apart by a fourth distance that is substantially equal to or less than twice the second effective radius.

8. The light generating device of claim 7, wherein a ratio of the third and fourth distances is in a range of about 4 : 3 to about 4.5 : 3.

9. The light generating device of claim 8, wherein the third distance in a range of about 80mm to about 90mm, and the fourth distance is about 60mm.

10. The light generating device of claim 7, wherein:
the red light source comprises a red light emitting diode and a first lens;
the blue light source comprises a blue light emitting diode and a second lens;
the first green light source comprises a first green light emitting diode and a third lens; and
the second green light source comprises a second green light emitting diode and a fourth lens.

11. A light generating device comprising:
a circuit board;
a plurality of light source groups, each of the light source groups comprising at least two light sources arranged on the circuit board by a first distance; and
a plurality of green light sources arranged on the circuit board by a second distance that is smaller than the first distance.

12. The light generating device of claim 11, wherein each of the light source groups comprises a red light source and a blue light source.

13. The light generating device of claim 12, wherein a first effective radius of the red and blue light sources is larger than a second effective radius of the first and second green light sources.

14. The light generating device of claim 13, wherein the first distance is substantially equal to or less than twice the first effective radius.

15. The light generating device of claim 14, wherein the second distance is substantially equal to or less than twice the second effective radius.

16. The light generating device of claim 15, wherein a ratio of the first and second distances is in a range of about 4 : 3 to about 4.5 : 3.

17. The light generating device of claim 16, wherein the first distance in a range of about 80mm to about 90mm, and the second distance is about 60mm.

18. The light generating device of claim 12, wherein:
the red light source comprises a red light emitting diode and a first lens;
the blue light source comprises a blue light emitting diode and a second lens; and
the green light source comprises a green light emitting diode and a third lens.

19. A display apparatus comprising:
a receiving container comprising a bottom plate and sidewalls extended from edge portions of the bottom plate;
a display panel displaying an image by using light; and
a light generating device being disposed on the bottom plate of the receiving container and generating the light, the light generating device comprising:
a circuit board; and
a plurality of light source units, each of the light source units comprising a first light source group and a second light source group, the first light source group comprising at least two light sources spaced apart from each other by a first distance and the second light source group spaced apart from a virtual line connecting a center of the light sources of the first light source group by a second distance that is larger than the first distance.

20. The display apparatus of claim 19, wherein the first light source group comprises a red light source and a blue light source, the second light source group comprises a first green light source and a second green light source, and the first and second green light sources are disposed on opposite sides the virtual line connecting centers of the light sources of the first light source group.

21. The display apparatus of claim 20, wherein a first effective radius of the red and blue light sources is larger than a second effective radius of the first and second green light sources.

22. The display apparatus of claim 21, wherein the first light source group of a specific light source unit is spaced apart from a first light source group of a next light source unit that is adjacent to the specific light source unit by a third distance that is substantially equal to or less than twice the first effective radius.

23. The display apparatus of claim 22, wherein the first and second green light sources in the specific and next light source units, respectively, are spaced apart by a fourth distance that is substantially equal to or less than twice the second effective radius.

24. The display apparatus of claim 23, wherein a ratio of the third and fourth distances is in a range of about 4 : 3 to about 4.5 : 3.

25. The display apparatus of claim 19, further comprising a power supply device that provides electric power for driving the light generating device to the circuit board.

26. The display apparatus of claim 19, further comprising a light guiding member disposed over the light generating device to guide lights generated from the light generating device.

27. The display apparatus of claim 26, further comprising an optical member disposed on the light guiding member.

28. A display apparatus comprising:
a receiving container comprising a bottom plate and sidewalls extended from edge portions of the bottom plate;
a display panel displaying an image by using light; and
a light generating device being disposed on the bottom plate of the receiving container and generating the light, the light generating device comprising:
a circuit board;
a plurality of light source groups comprising at least two light sources arranged on the circuit board by a first distance; and
a plurality of green light sources arranged on the circuit board by a second distance that is smaller than the first distance.

29. The display apparatus of claim 28, wherein each of the light source groups comprises a red light source and a blue light source.

30. The display apparatus of claim 29, wherein a first effective radius of the red and blue light sources is larger than a second effective radius of the first and second green light sources.

31. The display apparatus of claim 30, wherein the first distance is substantially equal to or less than twice the first effective radius.

32. The display apparatus of claim 31, wherein the second distance is substantially equal to or less than twice the second effective radius.

33. The display apparatus of claim 32, wherein a ratio of the first and second distances is in a range of about 4 : 3 to about 4.5 : 3.

34. The display apparatus of claim 33, wherein the first distance in a range of about 80mm to about 90mm, and the second distance is about 60mm.

35. The display apparatus of claim 19, further comprising:
a power supply device that provides electric power for driving the light generating device to the circuit board;
a light guiding member disposed over the light generating device to guide lights generated from the light generating device; and
an optical member disposed on the light guiding member.
